# EUROPEAN PATENT APPLICATION

(11) **EP 0 566 792 A1**
(43) Date of publication of application: **27.10.1993**
(21) Application number: 92303723.8
(22) Date of filing: 24.04.1992
(51) Int. Cl.: B01D 21/02, B01D 21/26

(54) **Separator**

(71) Applicant: HYDRO INTERNATIONAL LIMITED, Clevedon, Avon BS21 7RD (GB)
(72) Inventor: Smisson, Robert P. M., Clevedon, BS21 6BA Avon (GB)
(74) Representative: Nash, David Allan

(57) **Abstract**

There is provided a low energy gravitational separator for separating solid matter from a liquid mixture carrying the solid matter comprising: (a) a vessel having a cylindrical outer wall and a base at one end, (b) a body which is provided within the vessel and which defines with the base an annular opening spaced from the outer wall, (c) an annular dip plate in an upper region of the vessel and spaced from the outer wall of the vessel for stabilising flow patterns in the vessel, (d) a vessel inlet formed as an opening in the outer wall of the vessel for introducing the liquid mixture into the vessel, (e) an outlet in communication with an upper region of the vessel for removing from the vessel a treated liquid, (f) a solids collection region centrally disposed of the base for collecting solid matter separated from the liquid mixture, and (g) an inlet reservoir in communication with the vessel via the said vessel inlet, which inlet constitutes a drainage outlet from the inlet reservoir, the inlet reservoir being shaped to direct liquid from the reservoir through the drainage outlet into the vessel in a generally tangential direction thereby to promote a circulating flow of the liquid mixture within the vessel; the arrangement of the components of the separator being such that, in use with a circulating flow of liquid and solid matter within the vessel which is such that any separation of the solid component of the liquid in the vessel is brought about primarily by gravity, there is created a stabilised shear zone in the circulating liquid between an outer, relatively fast circulating region and an inner, relatively slowly circulating region and there is caused an inward sweeping effect of solids accumulated at the base of the vessel towards the said annular opening.

## Description

This invention relates to a device for separating solid matter from a liquid mixture.

Our British Patent Specification No. 2082941 and corresponding European Patent Specification No. 0162650 each relate to a separator for separating components of a fluid mixture. In particular, these two prior patent specifications relate to devices which are particularly suitable for separating sewage solids and other solid matter from water in storm water overflows. In use of devices the subject of these earlier patent specifications, there are several flow patterns in operation. Firstly, there is a general circulation of fluid in the vessel about the axis of the vessel and, secondly, a toroidal flow rising generally upwardly at the centre of the vessel and moving generally downwardly at the periphery of the vessel. Solid material entering the vessel generally sinks under the action of gravity and is swept toward an outlet at the centre of the base. In order to achieve efficient separation, it has been found that a flow modifying member, an annular dip plate and a top baffle which restrains material moving upwardly at the centre from flowing directly out of the vessel, are all essential to the efficient running of the device.

Our British Patent Specification No. 2233255 and corresponding European Patent Specification No. 0404548 describe a separator of the general type disclosed in GB-2082941 and EP-0162650 referred to above, but with the means obstructing the axial upward flow of liquid carrying solids removed. This has been found to enable the separator to be de-tuned in efficiency without affecting the general separating and concentrating ability of the separator, and particularly the ability of the device to separate material without clogging at the base. It was surprisingly found that, by this modification, particles having a settlement velocity below a specific level (but which are not so small as to be insignificant) are carried out with the liquid flow at the top of the vessel whilst particles having a settlement velocity above this level settle to the base of the device. By suitable modifications of other features of the vessel, such as the shape and size of the flow modifying member, the cylindrical side wall, the inclination of the base and the position of the dip plates, the specific cut-off point at which separation occurs can be adjusted.

United States Patent No. 4146468 describes a liquid-solid cylindrical separator having a flat base in which solids are separated under the action of gravity and are swept towards a central outlet in the base under the influence of a forced vortex. Liquid is withdrawn from the top of the separator to establish a free vortex in which a relatively light fraction (including floatable material) is concentrated. In contrast with our earlier patent specifications, the device describes in United States Patent No. 4146468 includes neither a flow modifying member which defines an annular slot with the base nor an annular dip plate for stabilizing flow patterns in the separator.

In accordance with a first aspect of the present invention, there is provided a low energy gravitational separator for separating solid matter from a liquid mixture carrying the solid matter comprising:
(a) a vessel having a cylindrical outer wall and a base at one end,
(b) a body which is provided within the vessel and which defines with the base an annular opening spaced from the outer wall,
(c) an annular dip plate in an upper region of the vessel and spaced from the outer wall of the vessel for stabilising flow patterns in the vessel,
(d) a vessel inlet formed as an opening in the outer wall of the vessel for introducing the liquid mixture into the vessel,
(e) an outlet in communication with an upper region of the vessel for removing from the vessel a treated liquid,
(f) a solids collection region centrally disposed of the base for collecting solid matter separated from the liquid mixture, and
(g) an inlet reservoir in communication with the vessel via the said vessel inlet, which inlet constitutes a drainage outlet from the inlet reservoir, the inlet reservoir being shaped to direct liquid from the reservoir through the drainage outlet into the vessel in a generally tangential direction thereby to promote a circulating flow of the liquid mixture within the vessel;
   the arrangement of the components of the separator being such that, in use with a circulating flow of liquid and solid matter within the vessel which is such that any separation of the solid component of the liquid in the vessel is brought about primarily by gravity, there is created a stabilised shear zone in the circulating liquid between an outer, relatively fast circulating region and an inner, relatively slowly circulating region and there is caused an inward sweeping effect of solids accumulated at the base of the vessel towards the said annular opening.

When the separator is required to separate solid material from the liquid mixture in an efficient manner, i.e. to remove as much as possible of the settleable material therefrom (for instance when the separator functions as a storm water overflow), there should preferably be provided, in an upper region of the vessel, a horizontally oriented baffle plate the periphery of which defines, with the inner surface of the dip plate, an annular gap through which liquid must flow to reach the outlet; this ensures that liquid cannot flow upwardly to the top of vessel toward the outlet in a substantially axial direction and encourages the generally toroidal flow in the vessel referred to above.

The separator of the present invention may also find usage as a device for separating a relatively dense material such as grit from a liquid mixture which includes both the dense component and a less dense material such as an organic component (e.g. sewage solids) which is to be removed from the liquid in a separate treatment step. Similarly, the separator may be used for classifying a particulate material carried in suspension by a liquid. Where the separator is to be used to in either of these ways to effect a separation of solids which are carried by the liquid mixture, so that a more settleable fraction is collected at the bottom of the separator and a less settleable fraction is carried out of the top of the vessel with the liquid, it is preferred that the arrangement of the separator is such that liquid may flow upwardly to the top of the vessel toward the outlet in a substantially axial direction as described in our British Patent Specification No. 2233255. In other words, the upper region of the vessel should be free from any obstruction (such as an internal baffle at the top of the vessel) which would prevent liquid from flowing upwardly to the top of vessel toward the outlet in a substantially axial direction.

Thus, according to a second aspect of the present invention, there is provided a low energy gravitational separator for classifying a particulate material carried in suspension by a liquid, comprising:
(a) a vessel having a cylindrical outer wall and a base at one end,
(b) a body which is provided within the vessel and which defines with the base an annular opening spaced from the outer wall,
(c) an annular dip plate in an upper region of the vessel and spaced from the outer wall of the vessel for stabilising flow patterns in the vessel,
(d) an inlet formed as an opening in the outer wall of the vessel for introducing the liquid carrying the particulate material into the vessel,
(e) an outlet in communication with an upper region of the vessel for removing from the vessel liquid carrying a component of the particulate material having a settlement velocity below a predetermined level,
(f) a solids collection region centrally disposed of the base for collecting particulate material having a settlement velocity above said predetermined level, and
(g) an inlet reservoir in communication with the vessel via the said vessel inlet, which inlet constitutes a drainage outlet from the inlet reservoir, the inlet reservoir being shaped to direct liquid from the reservoir through the drainage outlet into the vessel in a generally tangential direction thereby to promote a circulating flow of the liquid mixture within the vessel;
   wherein the upper region of the vessel is free from any obstruction which would prevent liquid from flowing upwardly to the top of vessel toward the outlet in a substantially axial direction; and wherein the arrangement of the components of the vessel is such that, in use with a circulating flow of liquid and solid matter within the vessel which is such that any separation of the solid component of the liquid in the vessel is brought about primarily by gravity, there is created a stabilised shear zone in the circulating liquid between an outer, relatively fast circulating region and an inner, relatively slowly circulating region and there is caused an inward sweeping effect of solids accumulated at the base of the vessel towards the said annular opening.

(The "settlement velocity" of a particle of matter represents its tendency to settle under gravity from an aqueous suspension. A high settlement velocity implies a rapid settlement and a low settlement velocity a slow rate of settlement. For instance, a stone will have a very high settlement velocity whilst a wool fibre will have a low settlement velocity. Using the apparatus of the present invention, separation of solids having high settlement velocities from those having low settlement velocities is made possible with a very specific cut off point between the two classes of components. This is particularly useful in classifying particulate material such as inorganic minerals, for example sand or clay.)

According to a third aspect of the present invention, there is provided a method of separating from a liquid mixture a solid component of that mixture which method comprises:
(i) introducing the liquid mixture into a gravitational separator comprising:
   (a) a vessel having a cylindrical outer wall and a base at one end,
   (b) a body which is provided within the vessel and which defines with the base an annular opening spaced from the outer wall,
   (c) an annular dip plate in an upper region of the vessel and spaced from the outer wall of the vessel for stabilising flow patterns in the vessel,
   (d) an inlet formed as an opening in the outer wall of the vessel for introducing the liquid mixture into the vessel,
   (e) an outlet in communication with an upper region of the vessel for removing from the vessel a treated liquid,
   (f) a solids collection region centrally disposed of the base for collecting solid matter separated from the liquid mixture, and
   (g) an inlet reservoir for receiving the liquid mixture to be treated, said inlet reservoir being in communication with the vessel via the said vessel inlet, which inlet constitutes a drainage outlet from the inlet reservoir, and the inlet reservoir being shaped to direct liquid from the reservoir through the drainage outlet into the vessel in a generally tangential direction thereby to promote a circulating flow of the liquid mixture within the vessel;
      the arrangement of the components of the separator being such that, in use with a circulating flow of the liquid mixture within the vessel which is such that any separation of the solids components of the liquid in the vessel is brought about primarily by gravity, there is created a stabilised shear zone in the circulating liquid between an outer, relatively fast circulating region and an inner, relatively slowly circulating region and there is caused an inward sweeping effect of solids accumulated at the base of the vessel towards the said annular opening;
(ii) causing a circulating flow of the liquid mixture within the vessel, said circulating flow being of such that any separation of the solids components of the liquid in the vessel is brought about primarily by gravity and there is created a stabilised shear zone in the circulating liquid between an outer, relatively fast circulating region and an inner, relatively slowly circulating region and there is caused an inward sweeping effect of any solids accumulated at the base of the vessel towards the said annular opening low energy rotational motion in the vessel; and
(iii) permitting solids to settle under gravity and be concentrated at the solids collection region.

If the separator of the second aspect of this invention is used in the method of the third aspect of the invention, there results a method of classifying a particulate material, dependent on the settlement characteristics of the particulate material in the liquid medium in which it is carried.

In the methods of the present invention, the removal of liquid via the outlet in the upper region of the vessel is achieved without establishing or creating a free vortex in the liquid in the vessel.

In the apparatus of the present invention, the base preferably slopes downwardly from the outer wall to the solids collection region and takes the form of a truncated inverted cone.

The body provided within the vessel defines with the base an annular opening which is spaced from the outer wall. It has been found that the best results are achieved when this body has a generally conical outer surface (which may be truncated - i.e. with there being no apex to the cone), the lower peripheral edge of the body defining with the base the said annular opening. This annular opening should preferably be about half-way between the central axis of the vessel and the outer wall. The body may be supported from the top of the separator, for instance by way of beams themselves supported across the top of the outer wall of the vessel, or may be supported from the base of the vessel. The body may be solid or hollow, or provided with channels or passageways, which enable liquid which passes through the annular gap between the body and the base to flow through the body and return to the vessel in a generally toroidal fashion.

The annular dip plate preferably terminates in the upper half of the vessel in a lower circumferential edge. A lid may be provided between the top of the dip plate and the outer wall of the vessel. This lid may be provided with a venting port for the purpose of venting air which becomes trapped under the lid. The dip plate defines a cylindrical tube through which liquid in the vessel rises as new liquid to be treated is introduced into the separator.

In a preferred embodiment of the separator of the present invention, the vessel communicates with the outlet via an upwardly extending tubular passageway which terminates in a circumferential weir. As fresh liquid to be treated is introduced into the vessel, treated liquid is forced to rise through the tubular passageway and spills over the weir preferably into an annular channel which surrounds the weir. From this channel, the liquid flows to the outlet. The circumferential weir need not be circular, but it is preferably so. It has been found that the use of a circumferential weir enables perturbations (which may be caused in the main body of liquid in the vessel by the presence of an outlet which is in direct communication with the vessel) to be avoided and therefore enhances operation. In this embodiment, the tubular passageway (in the form of an annular wall) may extend upwardly from the top of the dip plate constituting a continuation of the cylindrical tube defined by the dip plate; this annular wall terminates in a circumferential edge which constitutes the weir over which the rising liquid must flow to reach the outlet. It should be appreciated, however, that the tubular passageway need not represent a continuation of the dip plate in which case the weir will either be radially inward or radially outward of the dip plate. Outward of this annular wall there may be provided an outlet channel into which liquid spilling over the weir may flow before passing to a conduit or channel by which it is conveyed away from the separator.

The solids collection region centrally disposed of the base may be a sump provided with a suitable outlet pipe. To assist in removal of material from the sump, a small upright cone may be provided oriented with its axis coinciding with the axis of the vessel.

In accordance with a fourth aspect of the present invention, there is provided a low energy gravitational separator for separating solid matter from a liquid mixture carrying the solid matter comprising:
(a) a vessel having a cylindrical outer wall and a base at one end,
(b) a body which is provided within the vessel and which defines with the base an annular opening spaced from the outer wall,
(c) an annular dip plate in an upper region of the vessel and spaced from the outer wall of the vessel for stabilising flow patterns in the vessel,
(d) a vessel inlet for introducing the liquid mixture into the vessel,
(e) an outlet in communication with an upper region of the vessel for removing from the vessel a treated liquid, the vessel communicating with the outlet via an upwardly extending tubular passageway which terminates in a circumferential weir, and
(f) a solids collection region centrally disposed of the base for collecting solid matter separated from the liquid mixture;
   the arrangement of the components of the separator being such that, in use with a circulating flow of liquid and solid matter within the vessel which is such that any separation of the solid component of the liquid in the vessel is brought about primarily by gravity, there is created a stabilised shear zone in the circulating liquid between an outer, relatively fast circulating region and an inner, relatively slowly circulating region and there is caused an inward sweeping effect of solids accumulated at the base of the vessel towards the said annular opening.

In use of the separator of the fourth aspect of the present invention, as fresh liquid to be treated is introduced into the vessel, treated liquid is forced to rise through the tubular passageway and spills over the weir preferably into an annular channel which surrounds the weir. From this channel, the liquid flows to the outlet. The circumferential weir need not be circular, but it is preferably so. It has been found that the use of a circumferential weir enables perturbations (which may be caused in the main body of liquid in the vessel by the presence of an outlet which is in direct communication with the vessel) to be avoided and therefore enhances operation. The tubular passageway may be in the form of an annular wall which may extend upwardly from the top of the dip plate thereby constituting a continuation of the cylindrical tube defined by the dip plate; the annular wall terminates in a circumferential edge which constitutes the weir over which the rising liquid must flow to reach the outlet.

Operation of the separator of the fourth aspect of this invention, and the preferred features thereof, are the same as the separator of the first aspect of the present application as described above. Thus, the separator of the fourth aspect of the present invention may be employed as a low energy gravitational separator for classifying a particulate material in a manner analogous to the low energy gravitational separator of the second aspect of the present invention and may be employed in a method of separating from a liquid mixture a solid component of that mixture in a manner analogous to the method of the third aspect of the present invention.

Preferably, in the separator of the fourth aspect of the present invention, the vessel inlet is formed as an opening in the outer wall of the vessel and the separator is provided with an inlet reservoir for receiving the liquid mixture to be treated said inlet reservoir being in communication with the vessel via the said vessel inlet (which inlet constitutes a drainage outlet from the inlet reservoir), and the inlet reservoir being shaped to direct liquid from the reservoir through the drainage outlet into the vessel in a generally tangential direction thereby to promote a circulating flow of the liquid mixture within the vessel.

For a better understanding of the present invention and to show how it may be carried into effect, reference will now be made, by way of example, to the accompanying drawings, in which:
Figure 1 shows a high level plan view of a separator in accordance with the present invention;
Figure 2 is a cross-section taken along the line II-II in Figure 1;
Figure 3 shows a section on the line III in Figure 1;
Figure 4 is a cross-section taken along the line IV-IV in Figure 3; and
Figures 5 and 6 show alternative arrangement of the separator shown in Figure 1.

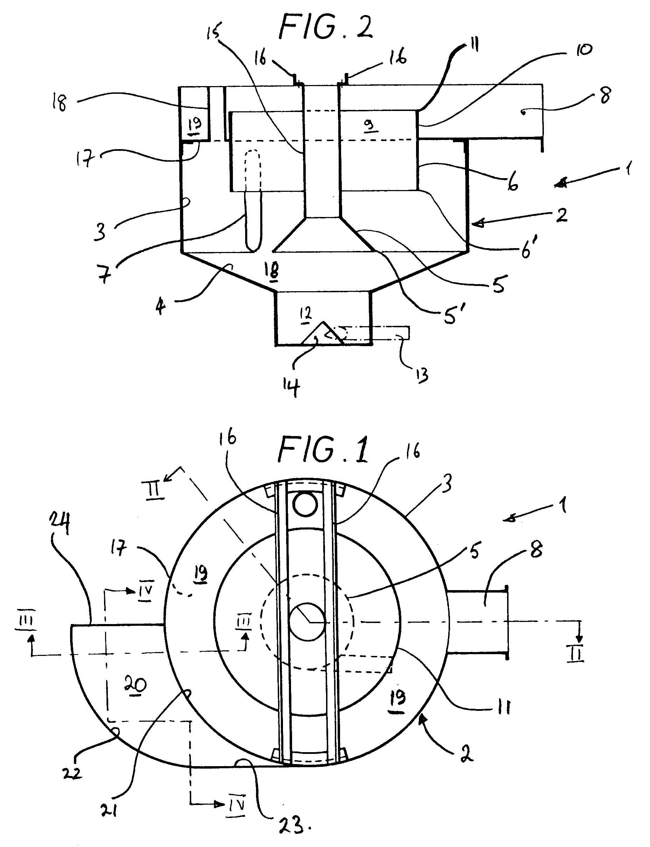

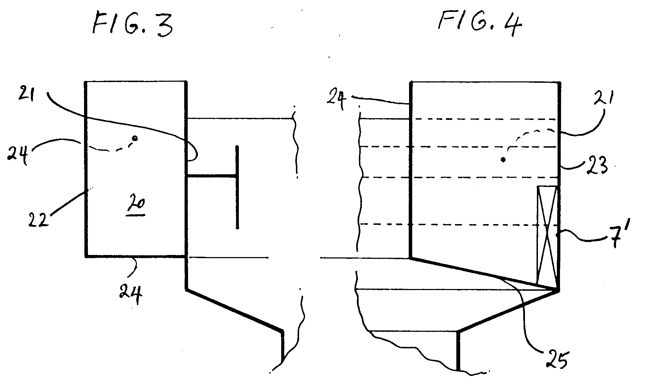

Figures 1 and 2 illustrate a low energy gravitational separator 1 in accordance with the present invention, for separating particulate solid matter from a liquid mixture carrying the solid matter. The separator 1 comprises a vessel 2 having a cylindrical outer wall 3 and a sloping base 4 at one end. A body 5 is provided within the vessel 2 having a lower peripheral edge 5' which defines with the base 4 an annular opening 18 spaced from the outer wall 3. In an upper region of the vessel 2, and spaced from the outer wall 3 thereof is provided an annular dip plate 6 for stabilising flow patterns in the vessel; the dip plate 6 has a bottom edge 6'. A vessel inlet 7 (also shown in Figure 4) is formed as an opening in the outer wall 3 of the vessel 2 for introducing the liquid mixture into the vessel 2. The separator 1 has an outlet 8 in communication with an upper region of the vessel 1 for removing from the vessel 1 a treated liquid. The vessel 1 communicates with the outlet 8 via an upwardly extending tubular passageway 9 defined by an annular wall 10 which terminates in a circumferential weir 11. In the embodiment shown, the circumferential weir 11 is circular, although this is not essential to the successful working of the invention. In the embodiment shown, the tubular passageway 9 extends upwardly from the top of the dip plate 6 and constitutes a continuation of the cylindrical tube defined by the dip plate 6. Outward of the annular wall 10 defining the tubular passageway 9, there is provided an annular outlet channel 19. A solids collection region or sump 12 is centrally disposed of the base 4 for collecting solid matter separated from the liquid mixture. The sump 12 is provided with an outlet pipe 13 and a small upright cone 14 which assists in removal of solids.

The body 4 is supported by a pillar 15 which is carried by beams 16 supported at the top of the outer wall 3.

Extending in from the outer wall 3 in the upper region of the vessel 2 is an annular lid 17 which terminates at the dip plate 6, about one third of the way into the vessel 2. This annular lid 17 is provided with a vent tube pipe 28 which extends from the lid 17 upwardly towards the top of the vessel 2.

Adjacent the outer wall 3 of the vessel 2, there is provided an inlet reservoir 20 in communication with the vessel 2 via said vessel inlet 7; the vessel inlet 7 constitutes a drainage outlet 7' from the inlet reservoir 20. The inlet reservoir 20 is defined, in part, by a quadrant 21 of the outer wall 3 of the vessel 2, an arcuate wall 22 (which may have the same radius of curvature as the outer wall 3 of the vessel or may be a "transition" curve - i.e. one with a constantly changing radius of curvature), a straight wall section 23 which is a continuation of the arcuate wall 22 and is directed towards the vessel 2 and an end wall section 24 to enclose the reservoir 20. The inlet reservoir 20 has a sloping base 25 which intersects the outer wall 3 of the vessel 2 at the bottom of the outer wall 3. The inlet reservoir 20 is therefore shaped to direct liquid from the reservoir 20 through the drainage outlet 7' into the vessel in a generally tangential direction thereby to promote a circulating flow of the liquid mixture within the vessel 2.

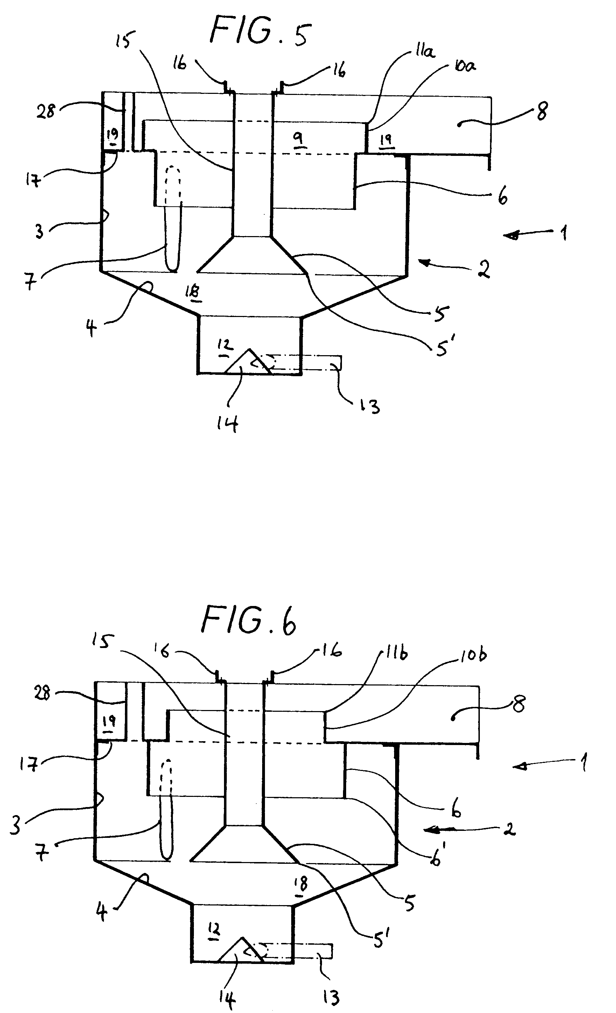

Figures 4 and 5 illustrate alternative embodiments with a different arrangement for the weir; thus Figure 4 shows an arrangement in which the annular wall 10a is radially outward of the dip plate 6 terminating in weir 11a thereby giving a narrower channel 19, whereas, in Figure 5, the annular wall 10b is radially inward of the dip plate 6 terminating in weir 11b.

Operation of the separator 1 is as follows. A liquid mixture comprising solid matter is introduced into the inlet reservoir 20 from which it drains, via the drainage outlet 7' into the separating vessel. A pressure head is established in the reservoir 20 and this drives a circulating motion of fluid in the vessel 2. As described in our earlier patent specifications referred to above, the arrangement of the components of the separator 1 is such that, in use with a circulating flow of liquid and solid matter within the vessel 2 which is of a low energy in order that any separation of the solids component of the liquid in the vessel 2 is brought about primarily by gravity, there is created a stabilised shear zone in the circulating liquid between an outer, relatively fast circulating region and an inner, relatively slowly circulating region and there is caused an inward sweeping effect of solids accumulated at the base 4 of the vessel 2 towards the said annular opening 18. In particular, the lower peripheral edge 5' of the body 5 in the vessel 2 and the bottom edge 6' of the dip plate define in use of the separator a shear zone and it is this shear zone which is important to the successful, stable operation of the separator 1 of this invention. As fresh liquid to be treated is introduced from the inlet reservoir 20 into the vessel 2, treated liquid is forced to rise through the tubular passageway 9 defined by annular wall 10 (10a - Figure 4; 10b - Figure 5) and spills over the weir 11 (11a; 11b) into the annular channel 19 which surrounds the weir 11 (11a; 11b). From this channel 19, the liquid flows to the outlet 8. It has been found that the use of a circumferential weir 11 (11a; 11b) enables perturbations (which may be caused in the main body of liquid in the vessel 2 by the presence of an outlet which is in direct communication with the vessel) to be avoided and therefore enhances operation.

The upper region of the separator 1 shown in the drawings is free from any obstruction which would prevent liquid from flowing upwardly to the top of vessel 2 toward the outlet 8 in a substantially axial direction and, as such, the separator is most suitable as a device for classifying a solid material carried in the liquid mixture into a particulate dense material such as grit which settles to the base 4 of the vessel 2 where it is collected in the sump 12 and lighter solids which are carried with the liquid through the central opening defined within the dip plate 6, through the tubular passageway 9 and over the weir 10 into the channel 11 from where it is removed via the outlet 8.

Solid material accumulated in the sump 12 is removed via the outlet pipe 13; the internal cone 14 assists in efficient removal of solids from the sump 12 by maintaining circular motion of the matter acumulated at the base.

## Claims

1. A low energy gravitational separator for separating solid matter from a liquid mixture carrying the solid matter comprising:
(a) a vessel having a cylindrical outer wall and a base at one end,
(b) a body which is provided within the vessel and which defines with the base an annular opening spaced from the outer wall,
(c) an annular dip plate in an upper region of the vessel and spaced from the outer wall of the vessel for stabilising flow patterns in the vessel,
(d) a vessel inlet formed as an opening in the outer wall of the vessel for introducing the liquid mixture into the vessel,
(e) an outlet in communication with an upper region of the vessel for removing from the vessel a treated liquid,
(f) a solids collection region centrally disposed of the base for collecting solid matter separated from the liquid mixture, and
(g) an inlet reservoir in communication with the vessel via the said vessel inlet, which inlet constitutes a drainage outlet from the inlet reservoir, the inlet reservoir being shaped to direct liquid from the reservoir through the drainage outlet into the vessel in a generally tangential direction thereby to promote a circulating flow of the liquid mixture within the vessel;
the arrangement of the components of the separator being such that, in use with a circulating flow of liquid and solid matter within the vessel which is such that any separation of the solid component of the liquid in the vessel is brought about primarily by gravity, there is created a stabilised shear zone in the circulating liquid between an outer, relatively fast circulating region and an inner, relatively slowly circulating region and there is caused an inward sweeping effect of solids accumulated at the base of the vessel towards the said annular opening.

2. A low energy gravitational separator according to claim 1, wherein there is provided, in an upper region of the vessel, a horizontally oriented baffle plate the periphery of which defines, with the inner surface of the dip plate, an annular gap through which liquid must flow to reach the outlet

3. A low energy gravitational separator according to claim 1, wherein the arrangement of the separator is such that liquid may flow upwardly to the top of the vessel toward the outlet in a substantially axial direction.

4. A low energy gravitational separator according to claim 1, wherein the vessel communicates with the outlet via an upwardly extending tubular passageway which terminates in a circumferential weir.

5. A low energy gravitational separator for classifying a particulate material carried in suspension by a liquid, comprising:
(a) a vessel having a cylindrical outer wall and a base at one end,
(b) a body which is provided within the vessel and which defines with the base an annular opening spaced from the outer wall,
(c) an annular dip plate in an upper region of the vessel and spaced from the outer wall of the vessel for stabilising flow patterns in the vessel,
(d) an inlet formed as an opening in the outer wall of the vessel for introducing the liquid carrying the particulate material into the vessel,
(e) an outlet in communication with an upper region of the vessel for removing from the vessel liquid carrying a component of the particulate material having a settlement velocity below a predetermined level,
(f) a solids collection region centrally disposed of the base for collecting particulate material having a settlement velocity above said predetermined level, and
(g) an inlet reservoir in communication with the vessel via the said vessel inlet, which inlet constitutes a drainage outlet from the inlet reservoir, the inlet reservoir being shaped to direct liquid from the reservoir through the drainage outlet into the vessel in a generally tangential direction thereby to promote a circulating flow of the liquid mixture within the vessel;
wherein the upper region of the vessel is free from any obstruction which would prevent liquid from flowing upwardly to the top of vessel toward the outlet in a substantially axial direction; and wherein the arrangement of the components of the vessel is such that, in use with a circulating flow of liquid and solid matter within the vessel which is such that any separation of the solid component of the liquid in the vessel is brought about primarily by gravity, there is created a stabilised shear zone in the circulating liquid between an outer, relatively fast circulating region and an inner, relatively slowly circulating region and there is caused an inward sweeping effect of solids accumulated at the base of the vessel towards the said annular opening.

6. A method of separating from a liquid mixture a solid component of that mixture which method comprises:
(i) introducing the liquid mixture into a gravitational separator comprising:
(a) a vessel having a cylindrical outer wall and a base at one end,
(b) a body which is provided within the vessel and which defines with the base an annular opening spaced from the outer wall,
(c) an annular dip plate in an upper region of the vessel and spaced from the outer wall of the vessel for stabilising flow patterns in the vessel,
(d) an inlet formed as an opening in the outer wall of the vessel for introducing the liquid mixture into the vessel,
(e) an outlet in communication with an upper region of the vessel for removing from the vessel a treated liquid,
(f) a solids collection region centrally disposed of the base for collecting solid matter separated from the liquid mixture, and
(g) an inlet reservoir for receiving the liquid mixture to be treated, said inlet reservoir being in communication with the vessel via the said vessel inlet, which inlet constitutes a drainage outlet from the inlet reservoir, and the inlet reservoir being shaped to direct liquid from the reservoir through the drainage outlet into the vessel in a generally tangential direction thereby to promote a circulating flow of the liquid mixture within the vessel;
the arrangement of the components of the separator being such that, in use with a circulating flow of the liquid mixture within the vessel which is such that any separation of the solids components of the liquid in the vessel is brought about primarily by gravity, there is created a stabilised shear zone in the circulating liquid between an outer, relatively fast circulating region and an inner, relatively slowly circulating region and there is caused an inward sweeping effect of solids accumulated at the base of the vessel towards the said annular opening;
(ii) causing a circulating flow of the liquid mixture within the vessel, said circulating flow being of such that any separation of the solids components of the liquid in the vessel is brought about primarily by gravity and there is created a stabilised shear zone in the circulating liquid between an outer, relatively fast circulating region and an inner, relatively slowly circulating region and there is caused an inward sweeping effect of any solids accumulated at the base of the vessel towards the said annular opening low energy rotational motion in the vessel; and
(iii) permitting solids to settle under gravity and be concentrated at the solids collection region.

7. A low energy gravitational separator for separating solid matter from a liquid mixture carrying the solid matter comprising:
(a) a vessel having a cylindrical outer wall and a base at one end,
(b) a body which is provided within the vessel and which defines with the base an annular opening spaced from the outer wall,
(c) an annular dip plate in an upper region of the vessel and spaced from the outer wall of the vessel for stabilising flow patterns in the vessel,
(d) a vessel inlet for introducing the liquid mixture into the vessel,
(e) an outlet in communication with an upper region of the vessel for removing from the vessel a treated liquid, the vessel communicating with the outlet via an upwardly extending tubular passageway which terminates in a circumferential weir, and
(f) a solids collection region centrally disposed of the base for collecting solid matter separated from the liquid mixture;
the arrangement of the components of the separator being such that, in use with a circulating flow of liquid and solid matter within the vessel which is such that any separation of the solid component of the liquid in the vessel is brought about primarily by gravity, there is created a stabilised shear zone in the circulating liquid between an outer, relatively fast circulating region and an inner, relatively slowly circulating region and there is caused an inward sweeping effect of solids accumulated at the base of the vessel towards the said annular opening.

8. A low energy gravitational separator according to claim 7, wherein an annular channel surrounds the weir.

9. A low energy gravitational separator according to claim 7 or 8, wherein the circumferential weir is a circular circumferential weir.

10. A low energy gravitational separator according to claim 7, 8, or 9, wherein the tubular passageway extends upwardly from the top of the dip plate thereby constituting a continuation of the cylindrical tube defined by the dip plate

11. A low energy gravitational separator according to claim 10, wherein the annular wall terminates in a circumferential edge which constitutes the weir over which the rising liquid must flow to reach the outlet.

12. A low energy gravitational separator according to any one of claims 7 to 11, wherein the vessel inlet is formed as an opening in the outer wall of the vessel and the separator is provided with an inlet reservoir for receiving the liquid mixture to be treated said inlet reservoir being in communication with the vessel via the said vessel inlet (which inlet constitutes a drainage outlet from the inlet reservoir), and the inlet reservoir being shaped to direct liquid from the reservoir through the drainage outlet into the vessel in a generally tangential direction thereby to promote a circulating flow of the liquid mixture within the vessel.

13. A low energy gravitational separator for classifying a particulate material carried in suspension by a liquid, comprising:
(a) a vessel having a cylindrical outer wall and a base at one end,
(b) a body which is provided within the vessel and which defines with the base an annular opening spaced from the outer wall,
(c) an annular dip plate in an upper region of the vessel and spaced from the outer wall of the vessel for stabilising flow patterns in the vessel,
(d) an inlet for introducing the liquid carrying the particulate material into the vessel,
(e) an outlet in communication with an upper region of the vessel for removing from the vessel liquid carrying a component of the particulate material having a settlement velocity below a predetermined level, the vessel communicating with the outlet via an upwardly extending tubular passageway which terminates in a circumferential weir, and
(f) a solids collection region centrally disposed of the base for collecting particulate material having a settlement velocity above said predetermined level, and
wherein the upper region of the vessel is free from any obstruction which would prevent liquid from flowing upwardly to the top of vessel toward the outlet in a substantially axial direction; and wherein the arrangement of the components of the vessel is such that, in use with a circulating flow of liquid and solid matter within the vessel which is such that any separation of the solid component of the liquid in the vessel is brought about primarily by gravity, there is created a stabilised shear zone in the circulating liquid between an outer, relatively fast circulating region and an inner, relatively slowly circulating region and there is caused an inward sweeping effect of solids accumulated at the base of the vessel towards the said annular opening.

14. A method of separating from a liquid mixture a solid component of that mixture which method comprises:
(i) introducing the liquid mixture into a gravitational separator comprising:
(a) a vessel having a cylindrical outer wall and a base at one end,
(b) a body which is provided within the vessel and which defines with the base an annular opening spaced from the outer wall,
(c) an annular dip plate in an upper region of the vessel and spaced from the outer wall of the vessel for stabilising flow patterns in the vessel,
(d) an inlet formed for introducing the liquid mixture into the vessel,
(e) an outlet in communication with an upper region of the vessel for removing from the vessel a treated liquid, the vessel communicating with the outlet via an upwardly extending tubular passageway which terminates in a circumferential weir, and
(f) a solids collection region centrally disposed of the base for collecting solid matter separated from the liquid mixture, and
the arrangement of the components of the separator being such that, in use with a circulating flow of the liquid mixture within the vessel which is such that any separation of the solids components of the liquid in the vessel is brought about primarily by gravity, there is created a stabilised shear zone in the circulating liquid between an outer, relatively fast circulating region and an inner, relatively slowly circulating region and there is caused an inward sweeping effect of solids accumulated at the base of the vessel towards the said annular opening;
(ii) causing a circulating flow of the liquid mixture within the vessel, said circulating flow being of such that any separation of the solids components of the liquid in the vessel is brought about primarily by gravity and there is created a stabilised shear zone in the circulating liquid between an outer, relatively fast circulating region and an inner, relatively slowly circulating region and there is caused an inward sweeping effect of any solids accumulated at the base of the vessel towards the said annular opening low energy rotational motion in the vessel; and
(iii) permitting solids to settle under gravity and be concentrated at the solids collection region.
